# FASCICULE DE BREVET EUROPEEN

(11) **EP 1 550 196 B1**
(45) Date de publication et mention de la délivrance du brevet: **27.10.2021**
(21) Numéro de dépôt: 03807925.7
(22) Date de dépôt: 29.09.2003
(51) Int. Cl.: H02K 11/33, H02K 11/35, E06B 9/32

(54) **ACTIONNEUR ELECTRIQUE COMPRENANT UN MOTEUR A COURANT CONTINU**
ELEKTRISCHES BETÄTIGUNGSGLIED MIT EINEM GLEICHSTROMMOTOR
ELECTRICAL ACTUATOR COMPRISING A DIRECT CURRENT MOTOR

(30) Priorité: 10.10.2002 FR 0212618
(43) Date de publication de la demande: 06.07.2005
(73) Titulaire: SOMFY ACTIVITES SA, 74300 Cluses (FR)
(72) Inventeur: BOUIX, Marc, 74440 Taninges (FR); BRUNO, Serge, 74460 Marnaz (FR)
(74) Mandataire: Novaimo
(86) Numéro de dépôt international: PCT/IB2003/004292
(87) Numéro de publication internationale: WO 2004/034551

(56) Documents cités:
- EP-A- 0 805 253
- EP-A- 0 852 281
- EP-A- 1 091 078
- EP-A1- 0 582 516
- EP-A2- 0 921 266
- DE-A- 10 034 527
- DE-A1- 4 301 203
- US-A- 5 818 703

## Description

L'invention concerne un actionneur électrique défini selon le préambule de la revendication 1.

Ces actionneurs sont souvent contenus dans une enveloppe cylindrique lorsqu'ils commandent le déplacement de volets roulants et dans une enveloppe parallélépipédique lorsqu'ils commandent le déplacement stores vénitiens.

Sauf applications très particulières nécessitant une alimentation autonome de type batterie d'accumulateurs et/ou panneaux solaires, ces actionneurs sont alimentés à partir du secteur alternatif dit « basse tension (BT) » (110 à 230 V, 50 ou 60 périodes selon les pays) et les moteurs électriques utilisés dans ces actionneurs sont en général de type asynchrone (moteur à induction) monophasé à condensateur permanent.

Néanmoins, il s'avère intéressant de remplacer de tels moteurs à courant alternatif par des moteurs à courant continu à aimants permanents, conçus pour fonctionner sous une très basse tension (TBT), c'est à dire le plus souvent inférieure à 48 V. De tels moteurs sont en effet produits en très grandes quantités, notamment pour les applications automobiles, et leur coût de revient est donc faible.

De plus, le moteur à courant continu est bien connu pour présenter une grande souplesse d'utilisation. En effet, il permet de contrôler la vitesse de rotation par la tension d'alimentation de l'induit et de détecter des obstacles en analysant le courant d'induit qui est l'image du couple moteur.

Cependant, la conversion d'une source électrique basse tension alternative en une source très basse tension continue pose des problèmes. En effet, les dimensions des composants nécessaires conduisent à séparer physiquement le convertisseur d'alimentation de l'actionneur. Cette séparation n'est pas pratique : elle impose d'aménager un deuxième emplacement destiné à recevoir le boîtier d'alimentation et surtout de prévoir une ligne de raccordement en câble de grosse section permettant l'alimentation du moteur à courant continu. Cette ligne de raccordement présente en outre l'inconvénient de rayonner les parasites engendrés par les commutations électriques du collecteur du moteur.

Du brevet FR 2 692 418, on connaît une solution à ce type de problème. Elle propose, comme d'autres documents de l'état de la technique, que dans chaque caisson de store vénitien soient logés simultanément le moteur à courant continu très basse tension, une batterie et un dispositif convertisseur formé par un transformateur et par un redresseur (Figure 3 de ce brevet). La batterie sert à accumuler l'énergie. De ce fait, le dispositif convertisseur est simplement dimensionné pour la recharge lente de la batterie, ce qui permet de réduire ses dimensions. Rien n'incite dans ce mode de réalisation à grouper tous ces éléments dans l'actionneur : ils sont clairement représentés de manière physiquement indépendante au sein du caisson. Au contraire, pour des questions de durée de vie ou de maintenance de la batterie, on a intérêt à prévoir son remplacement de manière aisée.

Une telle solution présente un inconvénient manifeste : il limite le nombre de manœuvres à la capacité de la batterie, laquelle ne peut se recharger que lentement.

De la demande EP 0 852 281, on connaît un actionneur tubulaire comportant un réducteur, un moteur à courant continu et une carte électronique de commande jouant également le rôle d'alimentation à partir du secteur. Il est précisé que cette carte permet en effet de remplacer un transformateur, dont l'encombrement est incompatible avec le montage dans le tube. La solution préconisée dans ce document consiste à remplacer de tels éléments par une unité électronique de puissance comprenant une bobine montée sur un noyau de ferrite, une diode, un pont redresseur et un condensateur.

Il est également précisé que la commande à distance de l'actionneur peut être réalisée par des moyens connus tels qu'une liaison par rayons infra-rouges ou une liaison par ondes radioélectriques.

Le problème posé par cette disposition réside dans les contraintes de miniaturisation évoquée dans l'art antérieur, mais aussi dans les relations de cohabitation entre les divers éléments. En effet, ceux-ci dissipent et reçoivent de l'énergie thermique, alors que leurs propres performances sont affectées par la température, émettent et reçoivent des rayonnements électromagnétiques, alors que la performance de l'un d'entre eux est directement affectée par le champ électromagnétique et, enfin, émettent et reçoivent des parasites conduits sur leur ligne d'alimentation.

On connaît de la demande EP 1 091 078, un dispositif de store motorisé dont le moteur est de type basse tension et est alimenté à partir du secteur par un convertisseur alternatif continu basse tension. L'utilisation d'un moteur basse tension pose certains problèmes. En effet, ces moteurs sont difficiles à réaliser et sont chers. Dans la réalisation proposée, le fonctionnement du convertisseur risque de perturber le récepteur d'ordres situé à proximité.

On connaît également, dans un tout autre domaine, du brevet US 5,818,703, un convertisseur continu-continu élévateur de tension destiné à l'alimentation d'un défibrillateur cardiaque dont l'interrupteur fonctionne à fréquence élevée.

Le document DE4301203A1 concerne un dispositif d'alimentation d'un moteur à courant continu à vitesse variable à partir d'une tension alternative. Il prévoit un interrupteur commandé pour effectuer cette alimentation.

Le document EP0582516A1 concerne un dispositif d'alimentation d'un moteur universel en PWM (pour Pulse Width Modulation ou Modulation de Largeur d'Impulsion, en français) pour résoudre des problèmes d'échauffement du moteur lorsque celui-ci est commandé en alternatif. Pour éviter des émissions sonores, l'interrupteur commandé est piloté à plus de 10kHz.

Le document EP0921266A2 décrit un dispositif de motorisation pour volet roulant ou store commandé par des moyens radio.

Le but de l'invention est d'améliorer les actionneurs de l'art antérieur et de résoudre les inconvénients précités. En particulier, l'invention se propose de regrouper dans un encombrement donné, un moteur à courant continu, une carte de commande de l'alimentation du moteur et un convertisseur de tension, la carte de commande comportant un récepteur d'ondes radioélectriques. Le fonctionnement d'un tel actionneur doit en outre être fiable.

L'actionneur électrique selon l'invention est caractérisé par la partie caractérisante de la revendication 1.

Partant de l'art antérieur ne nécessitant pas de batterie de stockage d'énergie électrique, il a été constaté dans le cadre des travaux menant à la présente invention que la miniaturisation d'un convertisseur ayant une puissance suffisante pour permettre l'alimentation simultanée d'un récepteur d'ondes radioélectriques, d'éléments logiques de commande et surtout du moteur électrique à courant continu, impose la présence d'au moins un interrupteur commandé, à une fréquence prédéterminée. Cet élément étant essentiel à l'obtention de performances thermiques satisfaisantes. Le fait d'utiliser un interrupteur commandé permet également l'usage d'un transformateur de dimensions réduites. Pour des contraintes d'encombrement données et pour un actionneur muni d'un récepteur d'ondes radioélectriques, il a été également constaté qu'il existe un compromis dans le choix de la fréquence de commande de l'interrupteur pour minimiser le coût global de la solution.

Les revendications dépendantes 2 et 3 définissent différents modes de réalisation du dispositif selon l'invention.

Le dessin annexé, représente à titre d'exemple, un mode de réalisation de l'actionneur selon l'invention.
La figure 1 est une vue schématique d'un actionneur selon l'invention.
La figure 2 est un graphique représentant, en ordonnées, les coûts de réalisation de l'actionneur selon l'invention en fonction du rapport de la fréquence de pilotage de l'interrupteur dans le convertisseur et de la fréquence de fonctionnement du récepteur d'ondes radioélectriques, en abscisses.

Dans des conditions représentatives de puissance et d'encombrement, la fréquence de transmission par ondes radioélectriques doit être supérieure à 4500 fois la fréquence de commande de l'interrupteur.

Le choix d'une fréquence de commande de l'interrupteur égale à deux fois la fréquence du secteur, et synchronisée sur celui-ci, permet d'obtenir le meilleur compromis performances / coût.

Un tel choix est compatible avec l'usage d'un transformateur classique, à tôles et sans noyau en ferrite, ce transformateur étant notablement plus petit que celui qui serait nécessaire dans le cas d'une alimentation traditionnelle par transformateur et redresseur.

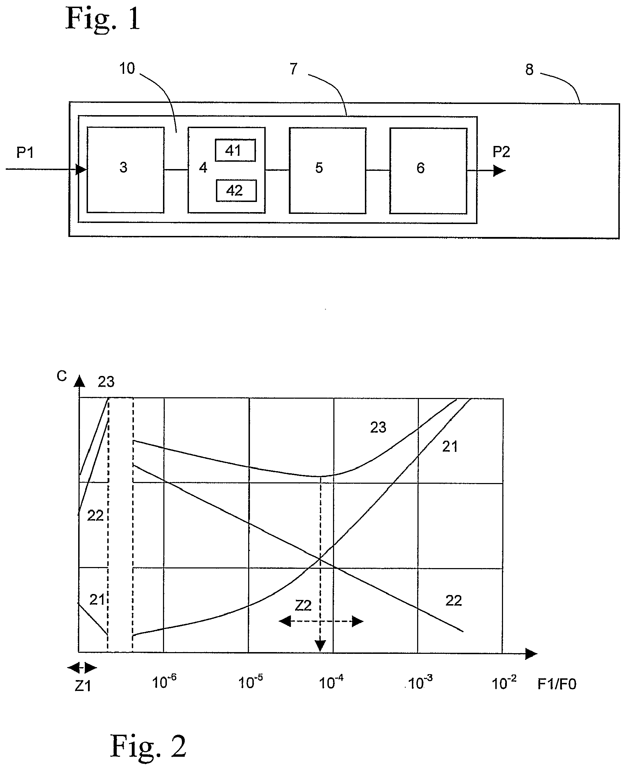

Un actionneur 10 représenté à la figure 1 prélève sur le secteur électrique alternatif une puissance P1 pour la convertir en puissance mécanique P2 sur un arbre de sortie. La puissance mécanique P2 en sortie est sensiblement inférieure à la puissance électrique P1 prélevée à l'entrée, du fait des pertes au sein de l'actionneur.

Un convertisseur alternatif/continu abaisseur 3 permet la conversion désirée d'une basse tension alternative en une très basse tension continue. Bien entendu, sa tension de sortie ne doit pas nécessairement être rigoureusement constante et des fluctuations importantes liées à la fréquence du secteur peuvent même être admises (par exemple un taux d'ondulation de 10 à 30 %). Pour des questions de bruit du moteur, on a néanmoins intérêt à réduire cette ondulation.

Cette tension est transmise à un moteur à courant continu très basse tension 5 par l'intermédiaire d'une carte de commande 4 comportant notamment un récepteur d'ondes radioélectriques 41. Comme dans l'art antérieur cité, le récepteur d'ondes radioélectriques capte les signaux de commande émis par une commande à distance, non représentée mais largement connue de l'homme du métier. Le récepteur 41 est accordé pour fonctionner à une fréquence notée F0. Son antenne est intérieure à l'enveloppe 7.

Bien entendu, l'élément 41 peut aussi être un émetteur-récepteur permettant l'envoi de signaux d'accusé de réception ou de bonne exécution d'ordre ou encore d'anomalie de fonctionnement.

La carte de commande 4 contient également une unité logique de traitement 42, par exemple un microcontrôleur, de manière à commander l'alimentation électrique du moteur en fonction des ordres reçus. Un capteur de courant moteur, non représenté, permet par exemple d'analyser le couple moteur. Il peut être associé à un capteur de vitesse ou de position lié au moteur et/ou à l'arbre de sortie du réducteur. Ces éléments sont connus de l'homme du métier.

Avantageusement, la carte de commande 4 et le convertisseur 3 sont montés sur un même circuit imprimé, comme décrit dans l'art antérieur. L'alimentation de la carte de contrôle est normalement prélevée sur la tension de sortie du convertisseur, mais il peut aussi être avantageux d'avoir recours à un circuit d'alimentation séparé, au moins pour l'alimentation du récepteur d'ondes radioélectriques lorsque celui-ci est à l'état de « veille ».

Le moteur à courant continu 5 est alimenté à partir du convertisseur 3 sous contrôle de la carte 4. C'est la consommation de celui-ci qui fixe principalement le dimensionnement du convertisseur. Le réducteur qui le suit dans la chaîne cinématique comprend généralement au moins deux étages de réduction.

L'ensemble des éléments précédents se trouve mécaniquement inséré dans une enveloppe tubulaire ou parallélépipédique 7 en acier . Les ouvertures nécessaires au passage du câble d'alimentation électrique et de l'arbre de sortie sont munis de moyens d'étanchéité permettant d'empêcher les poussières et les projections d'eau d'entrer dans l'enveloppe.

Cet ensemble 10 est lui-même inséré dans un élément de plus grande longueur tel que le tube d'enroulement d'un store ou d'un volet, ou encore le caisson d'un store vénitien. Cet élément est généralement en acier.

Pour les puissances considérées (plusieurs dizaines de watts), l'encombrement souhaité est de l'ordre d'une vingtaine de centimètres cubes se présentant sous forme de cylindre ayant typiquement un diamètre compris entre 20 et 40 mm. Dans ces conditions une alimentation ne comprenant que des éléments passifs ou unidirectionnels conduit à des échauffements intolérables, sauf à limiter considérablement les durées de manoeuvre. Elle sera donc avantageusement remplacée par une alimentation à interrupteur, piloté à une fréquence F1. Un transformateur de faibles dimensions peut être adjoint au montage convertisseur.

Dans d'autres domaines, et également dans le domaine des actionneurs pour protections solaires, de telles alimentations sont connues de l'homme du métier, avec différentes topologies. Par exemple, la demanderesse commercialise une alimentation à découpage permettant d'alimenter, à partir du secteur, une pluralité d'actionneurs tubulaires fonctionnant sous une tension continue de 24 Volts.

Il est notamment connu que plus la fréquence F1 est élevée, plus le volume de l'alimentation est faible pour une puissance donnée. Des fréquences de 80 KHz, voire supérieures à 100 KHz sont par conséquent couramment utilisées.

Les harmoniques induits par les commutations de l'interrupteur (ou des interrupteurs) sont incompatibles avec la présence d'un récepteur d'ondes radioélectriques 41 au sein de l'actionneur et cet effet augmente avec le rapport F1/F0.

Etant enfermé dans un tube ou un caisson métallique faisant écran et n'étant pas relié à une antenne extérieure de grandes dimensions, le récepteur utilisé doit avoir une très forte sensibilité. Il est donc très vulnérable aux rayonnements parasites.

Lorsqu'on est confronté à un problème de cohabitation entre une alimentation à interrupteur piloté en fréquence et entre un récepteur d'ondes radioélectriques, on le résout soit par des techniques de blindage et d'espacement des composants, soit par des techniques de filtrage, soit par le recours à un type particulier de mode de commutation permettant un fonctionnement en mode résonant ou quasi-résonant de l'alimentation. Le plus souvent, on utilise une combinaison de ces méthodes. On trouve dans les brevets US 5,642,274, US 5,528,481 ou US 4,686,614 des exemples de ces techniques. Il est à noter que, dans le cas d'un téléviseur par exemple, il existe suffisamment d'espace pour éloigner les ensembles critiques et minimiser ainsi les couplages.

Sauf à utiliser des éléments supplémentaires et coûteux de blindage et de filtrage, il paraît exclu a priori pour l'homme du métier de loger à proximité immédiate, et a fortiori sur un même circuit imprimé, une alimentation de puissance à interrupteur piloté en fréquence et un récepteur d'ondes radioélectriques de grande sensibilité.

L'invention montre cependant que cela est possible à un coût économiquement supportable et même en se passant d'une alimentation fonctionnant en mode résonant. Cette possibilité repose sur le respect de conditions particulières de fréquences.

La figure 2 représente schématiquement un diagramme asymptotique des coûts, en échelle logarithmique, en fonction du rapport des fréquences F1/F0, pour une puissance de moteur donnée. Les coûts sont exprimés en octaves (doublement pour chaque intervalle) et les rapports des fréquences en décades.

La courbe 22 représente les coûts fonctionnels d'ensemble, c'est à dire des coûts nécessaires pour réaliser le convertisseur 3 et la carte de commande 4 munie du récepteur 41 dans un encombrement donné. Dans cet exemple, la section d'encombrement est fixée et la longueur est libre.

Compte tenu des réglementations, la fréquence des ondes radioélectriques dans ce type d'application peut se situer à environ 100 KHz, et/ou sur les fréquences utilisées pour les communications de proximité de type RFID ou peut encore être supérieures à un MHz (par exemple, 27, 433, 868 ou 2400 MHz). Sauf à bénéficier d'effets de production de masse liés à des applications particulières, les coûts nécessaire à la réalisation du récepteur d'ondes radioélectriques se révèlent assez peu affectés par la fréquence. Par exemple, la détection AM de fréquences type 100 KHz est plus facile que la détection FM à 433 MHz. La dimension plus importante des composants dans le premier cas est compensée par leur plus petit nombre.

En première approximation, le coût des composants fonctionnels d'ensemble dépend donc beaucoup plus de la fréquence F1 du convertisseur que de la fréquence F0 du récepteur.

En effet, sauf dans le cas particulier où la fréquence F1 de commutation de l'alimentation est égale à la fréquence du secteur ou au double de celle-ci, l'augmentation de la fréquence F1 permet de miniaturiser le transformateur de l'alimentation et le condensateur de stockage limitant l'ondulation de la tension de sortie. Cette miniaturisation se traduit certes par le recours à des composants de coût légèrement croissant (noyau en ferrite des transformateurs, transistor de commutation servant d'interrupteur), mais ce coût est largement compensé par la diminution du volume d'encombrement et l'amélioration des performances thermiques qui sont directement liées au rendement. Le coût fonctionnel d'ensemble (représenté par la courbe 22) décroît donc lorsque la fréquence F1 augmente et donc lorsque le rapport F1/F0 augmente.

Par contre, l'usage d'une alimentation à interrupteur piloté à la fréquence du secteur ou à une fréquence basse multiple de la fréquence du secteur se traduit par une chute significative du coût de réalisation du convertisseur et donc du coût fonctionnel d'ensemble, puisqu'il permet l'usage d'un transformateur à noyau composé de tôles classiques et non composé de ferrite. Une telle alimentation est décrite par exemple dans le brevet US 5,818,708. Cette chute du coût est d'autant plus importante que, pour les basses fréquences, un transformateur à noyau en ferrite présente des dimensions importantes.

Le coût du filtrage est représenté par la courbe 21. Par filtrage, on entend ici tout élément de blindage ou d'atténuation permettant à l'ensemble de rester fonctionnel, une fois les éléments disposés à proximité immédiate les uns des autres dans l'enveloppe 7 et de respecter les normes. Le filtrage nécessité par le moteur est également pris en compte. Le filtrage s'applique aux modes de perturbations rayonnées et conduites.

Sauf pour les faibles valeurs de la fréquence de commutation de l'alimentation F1, cette courbe est croissante avec le rapport des fréquences F1/F0 : plus ce rapport est élevé, plus le convertisseur pollue le récepteur. Plus le rapport augmente, plus ce coût de filtrage est dû à la cohabitation des éléments.

Pour de faibles valeurs de F1 notamment égales ou multiples de la fréquence du secteur, on se trouve en présence d'un mode de fonctionnement du convertisseur impactant fortement les perturbations en mode conduit. Il en résulte un coût de filtrage supplémentaire, dicté par les contraintes réglementaires.

Le coût global est représenté par la courbe 23, somme des coûts fonctionnels et des coûts de filtrage.

On remarque qu'il existe deux zones de coût d'ensemble minimum : l'une Z1 correspondant à une très faible valeur du rapport F1/F0, l'autre Z2 située de part et d'autre d'une valeur approximativement égale à 7 10⁻⁵.

La zone Z1 correspond au cas particulier déjà mentionné d'une fréquence de pilotage de l'interrupteur égale ou double de celle du réseau alternatif d'alimentation.

Dans la deuxième zone Z2, on s'efforcera donc de satisfaire la condition optimale sur le rapport F1/F0. A titre d'exemple, une fréquence de pilotage égale à 30 KHz correspond à l'optimum pour une fréquence de 429 MHz.

Il est cependant clair que cet optimum autorise une légère dégradation sur le coût, pour privilégier un moindre encombrement. Une étendue convenable correspond à une décade centrée sur cette valeur.

Le rapport choisi peut donc varier dans une plage comprise entre 7/√10 10⁻⁵ (environ 2.2 10⁻⁵) et 7√10 10⁻⁵ (environ 2.2 10⁻⁴) tout en respectant l'enseignement de l'invention relatif à la zone Z2. Exprimées de manière inverse, les limites de ce rapport consistent d'une part à situer la fréquence F0 comme étant au moins supérieure à 4500 fois la fréquence F1 ; et, d'autre part, à prendre une valeur F0 inférieure à 45000 fois la fréquence F1.

Si on respecte les enseignements de l'invention, il n'est par conséquent pas incompatible d'utiliser un convertisseur à interrupteur piloté en fréquence et un récepteur d'ondes radioélectriques dans un espace confiné impliquant une forte interaction des éléments, ni même d'implanter ces fonctions sur une même carte de circuit imprimé.

De plus, l'invention permet alors, à moindre coût, l'usage d'un récepteur présentant une grande sensibilité et dont l'antenne est disposée à l'intérieur de l'enveloppe de l'actionneur.

## Revendications

1. Actionneur électrique (10) alimenté par le secteur et destiné à la manoeuvre d'un élément de protection solaire, de fermeture ou d'occultation comprenant, dans une même enveloppe (7), un moteur à courant continu (5), une carte de commande (4) de l'alimentation du moteur (5) et un convertisseur de tension (3) alternatif-continu, la carte de commande (4) comportant un récepteur d'ondes radioélectriques (41) à une fréquence (F0), le récepteur d'ondes radioélectriques étant adapté pour capter des signaux de commande émis par une commande à distance, le moteur (5), la carte de commande (4) et le convertisseur de tension (3) se trouvant mécaniquement insérés dans une enveloppe tubulaire ou parallélépipédique (7), **caractérisé :**
- **en ce que** le convertisseur de tension (3) est un convertisseur abaisseur permettant la conversion désirée d'une basse tension alternative en une très basse tension continue, et comprend au moins un interrupteur piloté à une fréquence (F1) telle que le rapport (F1/F0) de la fréquence de pilotage (F1) de l'interrupteur commandé sur la fréquence (F0) du récepteur d'ondes radioélectriques est compris dans un intervalle allant de 2,2×10⁻⁵ à 2,2×10⁻⁴, et
- **en ce que** le récepteur radioélectrique (41) de la carte de commande est muni d'une antenne disposée à l'intérieur de l'enveloppe (7) de l'actionneur, l'enveloppe (7) étant en acier,
le moteur étant un moteur très basse tension et à aimants permanents, le moteur (5) étant alimenté à partir du convertisseur de tension (3) sous contrôle de la carte de commande (4).

2. Actionneur électrique (10) selon la revendication 1, **caractérisé en ce que** le convertisseur de tension (3) comprend un transformateur de tension.

3. Actionneur électrique (10) selon l'une des revendications précédentes, **caractérisé en ce que** le convertisseur (3) et la carte de commande (4) sont montés sur un même circuit imprimé.

## Patentansprüche

1. Elektrischer Stellantrieb (10), welcher vom Netz gespeist wird und zur Betätigung eines Sonnenschutz-, Schließ- oder Verdunkelungselements bestimmt ist und in ein und derselben Hülle (7) einen Gleichstrommotor (5), eine Steuerkarte (4) zur Stromversorgung des Motors (5) und einen AC/DC-Spannungswandler (3) umfasst, wobei die Steuerkarte (4) einen Empfänger von Funkwellen (41) mit einer Frequenz (F0) umfasst, wobei der Funkwellenempfänger dafür ausgelegt ist, Steuersignale zu empfangen, die von einer Fernbedienung gesendet werden, wobei der Motor (5), die Steuerkarte (4) und der Spannungswandler (3) mechanisch in eine rohrförmige oder quaderförmige Hülle (7) eingesetzt angeordnet sind, **gekennzeichnet**
- **dadurch, dass** der Spannungswandler (3) ein Abwärtswandler ist, welcher die gewünschte Umwandlung einer niedrigen Wechselspannung in eine sehr niedrige Gleichspannung ermöglicht und wenigstens einen Schalter umfasst, der mit einer solchen Frequenz (F1) angesteuert wird, dass das Verhältnis (F1/F0) der Frequenz der Ansteuerung (F1) des gesteuerten Schalters zur Frequenz (F0) des Funkwellenempfängers in einem Intervall von 2,2×10⁻⁵ bis 2,2×10⁻⁴ liegt, und
- dadurch, dass der Funkwellenempfänger (41) der Steuerkarte mit einer Antenne ausgestattet ist, die im Inneren der Hülle (7) des Stellantriebs angeordnet ist, wobei die Hülle (7) aus Stahl besteht,
wobei der Motor ein Kleinspannungsmotor mit Permanentmagneten ist, wobei der Motor (5) von dem Spannungswandler (3) gespeist wird, gesteuert von der Steuerkarte (4).

2. Elektrischer Stellantrieb (10) nach Anspruch 1, **dadurch gekennzeichnet, dass** der Spannungswandler (3) einen Spannungstransformator umfasst.

3. Elektrischer Stellantrieb (10) nach einem der vorhergehenden Ansprüche, **dadurch gekennzeichnet, dass** der Wandler (3) und die Steuerkarte (4) auf ein und derselben Leiterplatte angebracht sind.

## Claims

1. Electrical mains-powered actuator (10) intended to operate a solar, closing or privacy protection element comprising, in a common enclosure (7), a direct current motor (5), a board (4) controlling the motor (5) power supply and an AC-DC voltage converter (3), the control board (4) comprising a receiver of radio-waves (41) at a frequency (F0), the radio-wave receiver being designed to pick up control signals emitted by a remote control, the motor (5), the control board (4) and the voltage converter (3) being mechanically inserted into a tubular or parallelepipedal enclosure (7), **characterized:**
- **in that** the voltage converter (3) is a step-down converter enabling the desired conversion from a low AC voltage to a very low DC voltage, and comprises at least one switch controlled at a frequency (F1) such that the ratio (F1/F0) of the control frequency (F1) of the control switch to the frequency (F0) of the radio-wave receiver ranges between 2.2×10⁻⁵ to 2.2×10⁻⁴, and
- **in that** the radio-wave receiver (41) of the control board is provided with an antenna located inside the enclosure (7) of the actuator, the enclosure (7) being made of steel,
the motor being a very low voltage motor and with permanent magnets, the motor (5) being powered from the voltage converter (3) under the control of the control board (4).

2. Electrical actuator (10) according to Claim 1, **characterized in that** the voltage converter (3) comprises a voltage transformer.

3. Electrical actuator (10) according to one of the preceding claims, **characterized in that** the converter (3) and the control board (4) are mounted on the same printed circuit.
